# EUROPÄISCHE PATENTSCHRIFT

(11) **EP 2 032 472 B1**
(45) Veröffentlichungstag und Bekanntmachung des Hinweises auf die Patenterteilung: **28.10.2009**
(21) Anmeldenummer: 07764545.5
(22) Anmeldetag: 22.05.2007
(51) Int. Cl.: B65G 1/137

(54) **REGAL-INTEGRIERTE PACKSTATION UND KOMMISSIONIERVERFAHREN**
PACKING STATION INTEGRATED IN SHELVING, AND PICKING METHOD
STATION DE REMPLISSAGE INTÉGRÉE À UN RAYONNAGE ET PROCÉDÉ DE PRÉPARATION DE COMMANDE

(30) Priorität: 24.05.2006 DE 102006025619
(43) Veröffentlichungstag der Anmeldung: 11.03.2009
(73) Patentinhaber: SSI Schäfer Noell GmbH Lager-und Systemtechnik, 97232 Giebelstadt (DE)
(72) Erfinder: SCHÄFER, Gerhard, 57290 Neunkirchen (DE)
(74) Vertreter: Witte, Weller & Partner
(86) Internationale Anmeldenummer: PCT/EP2007/004518
(87) Internationale Veröffentlichungsnummer: WO 2007/134833

(56) Entgegenhaltungen:
- EP-A1- 1 099 652
- DE-A1- 10 200 077

## Beschreibung

Die vorliegende Erfindung betrifft einen Arbeitsplatz zum Kommissionieren und gleichzeitigen Packen von Artikeln auf einen Versandträger.

Die vorliegende Erfindung betrifft ferner ein Verfahren zum Kommissionieren und gleichzeitigen Packen von Artikeln aus einem Regal auf einen Versandträger, um einen Kommissionierauftrag abzuarbeiten.

Im Stand der Technik sind die verschiedene Kommissioniersysteme und Kommissionierverfahren bekannt.

Es gibt zwei grundlegend verschiedene Prinzipien, nach denen kommissioniert wird.

Bei einem wird die zu kommissionierende Ware von einer Person bzw. einem Kommissionierer (manuell) aus einem Lager geholt, um in einen Behälter oder auf eine Palette kommissioniert zu werden, die der Kommissionierer (permanent) mit sich führt. Bei diesem "Mann-zur-Ware"-Prinzip wird dieser Vorgang so oft wiederholt, bis alle Artikel eines Kommissionierauftrags abgearbeitet sind. Unter einem Kommissionierauftrag versteht man eine Zusammenstellung von verschiedenen Artikeln in unterschiedlichen Anzahlen, die z.B. eine Bestellung eines Kunden repräsentiert. Ferner können bei dem Prinzip "Mann zur Ware" sog. Kommissionierfahrzeuge eingesetzt werden, die z.B. in einem Regallager horizontal zwischen den Regalen, d.h. in Regalgassen, und in vertikaler Richtung verfahrbar sind, um den Kommissionierer, der einem entsprechenden Kommissionierstand des Kommissionierfahrzeugs sitzt oder steht, zu einem entsprechenden Regalplatz zu fahren, wo der gerade zu kommissionierende Artikel gelagert ist. Bei einer anderen Ausgestaltung des Prinzips "Mann zur Ware" läuft der Kommissionierer die Regale ab und kommissioniert Artikel aus dem Regal z.B. in einen Behälter, den er selbst trägt, oder auf eine Palette, die er mit Hilfe eines Palettentransportgeräts (z.B. einer Ameise) hinter sich herzieht.

Nachteilig bei diesem Kommissionierprinzip "Mann zur Ware" ist, dass die Kommissionierer weite Wege zurücklegen müssen, was sich in einem hohen Zeitaufwand zum Abarbeiten eines Kommissionierauftrags, und somit in einem geringen Durchsatz, widerspiegelt. Falls der Kommissionierer das Regal ablaufen muss, ist dies aus ergonomischen Gesichtspunkten ungünstig. Falls der Kommissionierer den Behälter, in dem kommissioniert wird, selbst trägt oder auch auf einer Rollenbahn mitschiebt, ist dies ebenfalls ergonomisch ungünstig und es können lediglich wenige Artikel kommissioniert werden, d.h. ein Kommissionierauftrag muss womöglich in mehrere Unteraufträge aufgeteilt werden. Dies wiederum erhöht einen Steuerungsaufwand für die Abarbeitung des Kommissionierauftrags. Die Kommissionierung erfolgt artikelorientiert.

Bei einem anderen Kommissionierprinzip wird die zu kommissionierende Ware zum Kommissionierer transportiert. In diesem Fall spricht man von dem Prinzip "Ware zum Mann". Die Kommissionierung erfolgt auftragsorientiert. Die Ware wird gemäß einem abzuarbeitenden Auftrag zum Mann transportiert.

Beim Prinzip "Ware zum Mann" (z.B. EP 1 099 652) sind die zu kommissionierenden Artikel vorzugsweise in Behältern, auf Tablaren, auf Paletten oder ähnlichen Ladehilfsmitteln in einem Lager bevorratet. Solche Behälter werden auch Lagerbehälter genannt. Die Kommissionierung erfolgt örtlich vom Lager getrennt an sog. Kommissionierplätzen. Die in den Lagerbehältern gelagerten Artikel werden über eine Fördertechnik, wie z.B. motorbetriebene Rollenbahnen, Gurtbänder, Hängeförderer, etc. zum Kommissionierplatz transportiert. Am Kommissionierplatz steht oder sitzt der Kommissionierer und wartet auf die Lagerbehälter, um zu kommissionierende Artikel zu entnehmen und die entnommenen Artikel in z.B. Auftragsbehälter zu geben. Ein fertig kommissionierter Auftragsbehälter kann dann mit einer weiteren Fördertechnik entweder zu einer örtlich entfernt gelegenen Packstation und anschließend zu einer Versandstation oder direkt zu einer Versandstation transportiert. Von der Versandstation aus werden die Auftragsbehälter dann z.B. per Pkw oder Lkw zum zugehörigen Auftraggeber, d.h. zu dem Kunden, transportiert.

Das Prinzip "Ware zum Mann" zeichnet sich insbesondere durch seine ergonomischen Gesichtspunkte aus. Ein Kommissionierer muss sich nahezu nicht bewegen, um einen Kommissionierauftrag abarbeiten zu können. Mittels der eingesetzten Fördertechnik kann ein hoher Durchsatz erzielt werden. Lager können räumlich enger gebaut werden, da der Kommissionierer nicht mehr durch die einzelnen Regalgassen fahren oder laufen muss. Ein- und Auslagerungsvorgänge können automatisiert werden.

Bei diesem Kommissionierprinzip sind jedoch die hohen Investitionskosten nachteilig. Die Investitionskosten werden, u.a., durch das Ausmaß der eingesetzten Fördertechnik bestimmt. Je mehr Fördertechnik eingesetzt wird, desto teurer wird der Anschaffungspreis des Kommissioniersystems sein. Je mehr Fördertechnik eingesetzt wird, desto mehr Raum wird für den Aufbau der Fördertechnik benötigt.

Ferner ist der Steurungsaufwand für die Abarbeitung eines Kommissionierauftrags größer. Eine Anlieferung eines Lagerbehälters an einen Kommissionierplatz muss "synchron" zur Anlieferung eines Auftragsbehälters erfolgen. Synchron bedeutet hier, dass ein Lagerbehälter zum richtigen Zeitpunkt zeitlich exakt an den richtigen Kommissionierplatz transportiert werden muss, was sich bei einem Einsatz einer komplexen Lagerbehälter-Fördertechnik als aufwändig und komplex herausstellen kann. Ähnliches gilt für den anschließenden Transport des Auftragsbehälters zum Kommissionierplatz und/oder zur Versandstation.

Bei größeren komplexeren Lagern können im Materialfluss immer wieder Staus auftreten, die die berechneten Laufzeiten (Lagerbehälter synchron zum Auftragsbehälter) verändern. Unterschiedlich weite Wege (Lagerorte) der Artikel müssen beachtet werden, was die Materialflussoptimierung betrifft. Oftmals sprechen die Reihenfolge und Sequenzierung der Behälter (Materialfluss) gegen einen optimierten Fahrweg von Regalbedienfahrzeugen. Deshalb findet herkömmlicherweise eine Batch-Vergrößerung statt. Unter einer Batch versteht man in der Logistik die Zusammenfassung mehrerer Kommissionieraufträge zu einer geordneten Menge oder Liste von Aufträgen. Allgemein werden dabei die in einer Batch zusammengefassten Aufträge ohne Unterbrechung durch eine Bedienereingabe eingelastet. Deshalb müssen alle zur Durchführung der Aufträge notwendigen Daten bereits vor Beginn der Abarbeitung vorliegen. Eine Vergrößerung der Batch erfordert aber eine zusätzliche Sortierung und zusätzliche Fördertechnik, was nachteilig ist. Auch Sequenzierungspuffer müssen vor den Kommissionierplätzen eingesetzt werden, was das Gesamtsystem wiederum komplexer macht.

Es ist daher eine Aufgabe der vorliegenden Erfindung, einen verbesserten Arbeitsplatz vorzusehen, der höchsten ergonomischen Anforderungen genügt, einen höhere Kommissionierleistung ermöglicht, den Planungsaufwand (Steuerung) zur Abarbeitung eines Kommissionierauftrags reduziert sowie die Investitionskosten minimiert.

Diese Aufgabe wird durch einen Arbeitsplatz zum Kommissionieren und gleichzeitigen Packen von Artikeln auf einen Versandträger gemäß Anspruch 1 gelöst, wobei der Arbeitsplatz u.a. aufweist: zumindest ein Regal, das in zumindest eine Regalebene, die jeweils eine Vielzahl von Regalplätzen zum Lagern von Ladehilfsmitteln umfasst, unterteilt ist, wobei die zu kommissionierenden Artikel in oder auf den Ladehilfsmitteln in Regalplätzen gelagert werden; zumindest eine vertikale Lifteinheit, die angrenzend an eine Längsseite des Regals angeordnet ist und die dazu geeignet ist, aus solchen Regalplätzen, die an die Lifteinheit angrenzen, Ladehilfsmittel abzuholen; und zumindest eine Packstation, die in einem unmittelbaren Bereich der Lifteinheit angeordnet ist.

Der erfindungsgemäße Arbeitsplatz ist also in das Lagerregal integriert. Dadurch entfällt eine Fördertechnik zum Transportieren von z.B. Lagerbehältern zum Kommissionierplatz, wo im Stand der Technik die zu kommissionierenden Artikel kommissioniert, d.h. zusammengestellt, werden. Gemäß der vorliegenden Erfindung werden die zu kommissionierenden Artikel auch sofort auf einem Versandträger, wie z.B. einer Euro-Palette, gepackt. Somit entfällt neben der Lagerbehälter-Fördertechnik auch die Auftragsbehälter-Fördertechnik, um fertig kommissionierte Auftragsbehälter zu einer Packstation zu transportieren. Folglich reduzieren sich die Investitionskosten aufgrund der Reduktion von verbauter Fördertechnik.

Da die Packstation im unmittelbaren Bereich der Lifteinheit, d.h. in einem eng begrenzten Raum, der vorzugsweise durch wenige Schritte vom Kommissionierer durchquert werden kann, angeordnet ist, kann bei der Konzeptionierung der Kommissionieranlage bzw. des Kommissioniersystems enorm viel Platz eingespart werden. Diese Platzeinsparungen basieren im Wesentlichen auf dem Wegfall der entsprechenden Fördertechniken sowie der separaten Kommissionierplätze. Auch separate Packstationen entfallen.

Gemäß einer bevorzugten Ausführungsform weist der Arbeitsplatz eine Einrichtung zum Präsentieren der Hilfsmittel auf, die derart angeordnet ist, dass Ladehilfsmittel von der Lifteinheit an die Einrichtung zum Präsentieren der Ladehilfsmittel abgegeben werden können.

Die Einrichtung zum Präsentieren der Ladehilfsmittel ist aus ergonomischen Gründen und Gründen der Arbeitssicherheit vorgesehen und erleichtert der Kommissionierperson eine Entnahme von zu kommissionierenden Artikeln von Ladehilfsmitteln bzw. aus Ladehilfsmitteln. Um die Übergabe der Ladehilfsmittel von der Lifteinheit zu der Einrichtung zum Präsentieren der Ladehilfsmittel automatisiert durchführen zu können, insbesondere ohne dass dafür eine Fördertechnik vorgesehen werden muss, grenzt die Lifteinheit vorzugsweise direkt an die Einrichtung zum Präsentieren der Ladehilfsmittel. Jedoch kommt der Kommissionierer nicht in direkten Kontakt mit der vorzugsweise automatisierten Lifteinheit, was wiederum seine Sicherheit erhöht.

Ferner ist es bevorzugt, wenn die Einrichtung zum Präsentieren der Ladehilfsmittel in ein Gestell nach Art des Regals integriert ist, wobei das Gestell vorzugsweise oberhalb und/oder unterhalb der Einrichtung zum Präsentieren weitere Regalplätze zum Lagern von Ladehilfsmitteln aufweist.

Auf diesen weiteren (zusätzlichen) Regalplätzen können solche Ladehilfsmittel gelagert werden, die Artikel enthalten, die sehr häufig zur Abarbeitung eines Kommissionierauftrags angefordert werden (herkömmlicherweise auch als A-Artikel, Schnellläufer oder Schnelldreher bezeichnet). Die Wege zwischen den weiteren Regalplätzen und der Packstation sind sehr kurz, was sich in einer kurzen Transportzeit zur Packstation widerspiegelt, weshalb sich der Durchsatz erhöhen lässt. Alternativ können auf den zusätzlichen Regalplätzen auch leere Versandträger gelagert werden, wobei, wenn ein Kommissionierauftrag abgeschlossen ist, ein leerer Versandträger über die Lifteinheit zur Packstation transportiert wird, um den nächsten Kommissionierauftrag abarbeiten zu können.

Grundsätzlich befinden sich die Artikel immer im Bereich des Regals, d.h. verlassen das Regal nicht, wie es beim Einsatz einer Fördertechnik der Fall wäre, die z.B. Lagerbehälter zu einem Kommissionierplatz transportiert. Staus auf der Fördertechnik gibt es nicht. Es kann jederzeit auf das Ladehilfsmittel zugegriffen (im Sinn von Verfügbarkeit) werden, selbst wenn das Ladehilfsmittel schon auf dem Weg (durch das Regal) zu einer Packstation ist.

Die Reihenfolge, mit der Aufträge abgearbeitet werden, kann schnell und flexibel geändert werden (Eilaufträge, Nachmeldung, etc).

Gemäß einer besonderen Ausgestaltung der Erfindung umfasst die Einrichtung zum Präsentieren der Ladehilfsmittel Mittel zum Neigen derselben, damit die Einrichtung zum Präsentieren der Ladehilfsmittel in Richtung der Packstation abgeneigt werden kann.

Diese Maßnahme ist aus ergonomischen Gründen vorgesehen. Ein Kommissionierer muss zu kommissionierende Artikel lediglich zum Versandträger ziehen, wobei die Gravitationskraft unterstützend wirkt. Vorzugsweise ist dazu ferner ein Verschiebemechanismus am Gestell vorgesehen, der vom Kommissionierer betätigt wird und der das Verschieben der Ladehilfsmittel (Artikel) zur Packstation mit einer Hilfskraft unterstützt.

Außerdem ist es von Vorteil, wenn die Lifteinheit zumindest einen in vertikaler Richtung beweglichen Lift aufweist, der ein oder mehrere Lastaufnahmemittel zum Abholen eines Ladehilfsmittels von einem Regalplatz und zum Abgeben eines Ladehilfsmittels an einen Regalplatz umfasst, wobei die Packstation an den Lift angrenzt.

Die Lifteinheit weist zumindest einen Lift zum. Liefern von Ladehilfsmitteln zur Packstation auf. Der Lift verfügt dazu über Lastaufnahmemittel, mit denen die Ein-und Auslagerung von Ladehilfsmitteln automatisiert durchgeführt werden kann. Der Lift und die Packstation sind vorzugsweise so zueinander angeordnet, dass auf eine zusätzliche Fördertechnik zum Transport von Ladehilfsmitteln zwischen diesen Einheiten verzichtet werden kann.

Vorzugsweise verfügt jede Lifteinheit über zumindest zwei separat in vertikaler Richtung bewegliche Lifte.

Durch das Vorsehen von zwei separat ansteuerbaren Liften kann die Anzahl von Einzelspielen, d.h. Wechsel des Ladehilfsmittels zwischen verschiedenen Einheiten des Kommissioniersystems, erhöht werden. Während der eine Lift Ladehilfsmittel in Richtung der Packstation abgibt, kann der andere Lift schon wieder ein neues Ladehilfsmittel aus dem Regal holen. Dadurch verkürzt sich die Wechselzeit und die Kommissionierleistung wird erhöht. Ein Kommissionierer muss somit nicht auf einen Ladehilfsmittelwechsel warten und kann so kontinuierlich arbeiten.

Gemäß einer bevorzugten Ausführungsform ist die Packstation in einem Bereich zwischen zwei benachbarten Einrichtungen zum Präsentieren von Ladehilfsmitteln, von denen jede einem anderen der Lifte zugeordnet ist, angeordnet.

Dadurch wird der Platzbedarf weiter minimiert. Packstation, Lift und Einrichtung zum Präsentieren von Ladehilfsmitteln sind kompakt im unmittelbaren Bereich der Lifteinheit angeordnet. Der Kommissionierer muss nicht laufen, um zu kommissionieren. Dies erhöht wiederum die Ergonomie. Artikel bzw. Ladehilfsmittel müssen nicht angehoben, sondern nur geschoben oder gezogen werden.

Gemäß einer vorteilhaften Ausgestaltung umfasst der Arbeitsplatz ein weiteres Regal mit einer ebenfalls seitlich angeordneten weiteren Lifteinheit, wobei das weitere Regal so gegenüberliegend zu dem Regal angeordnet ist, dass die Packstation im unmittelbaren Bereich sowohl der Lifteinheit des Regals als auch der weiteren Lifteinheit des weiteren Regals liegt.

Durch diese Anordnung kann eine Packstation mittig in einer Regalgasse angeordnet werden, wobei die Versorgung der Packstation mit Ladehilfsmitteln aus zwei Regalen erfolgt. Auch hier ist keine zusätzliche Fördertechnik zur Anlieferung von zu kommissionierenden Artikeln notwendig. Ein Artikelsortiment, aus dem ausgewählt werden kann, kann dementsprechend unter Beibehaltung der Dynamik vergrößert werden.

Vorzugsweise weist die Packstation einen Rahmen, einen Schacht, eine Führung o.Ä. zum Unterstützen eines Packvorgangs auf.

Der Rahmen verhindert, dass bereits auf den Versandträger gepackte Artikel (seitlich) verrutschen. Insbesondere ist zumindest eine der Seiten des Rahmens beweglich ausgebildet, z.B. klappbar oder als Rollo ausgebildet, so dass der Versandträger für den Kommissionierer dort frei zugänglich ist. Der Kommissionierer hat von verschiedenen Seiten Zugang. Es können auch unhandliche Einheiten auf einfache Weise gepackt werden.

Gemäß einer weiteren Ausführungsform umfasst die Packstation eine Hubeinrichtung, mit der Versandträger auf ein Arbeitsniveau angehoben werden und auf ein Versandniveau abgesenkt werden.

Wenn viele Artikel auf den Versandträger kommissioniert werden müssen, resultiert dies in einem hohen Artikelstapel auf dem Versandträger. Um dem Kommissionierer ein Arbeiten in nahezu ein und derselben (Andienungs-)Höhe, vorzugsweise in der ergonomisch günstigsten Höhe, zu ermöglichen, wird der Versandträger schicht- bzw. ebenenweise abgesenkt, sobald eine Artikelschicht auf dem Versandträger gepackt ist. Auf dem Versandniveau ist vorzugsweise eine Fördertechnik zum Abtransport fertig gepackter Versandträger angeordnet. Der Flächenbedarf wird so reduziert, da verschiedene Kommissionieranlagenkomponenten in unterschiedlichen Ebenen angeordnet sind.

Gemäß einer bevorzugten Ausführungsform ist die Packstation auf einem vorbestimmten Niveau angeordnet, das vorzugsweise in Höhe einer der Regalebenen liegt.

Diese Anordnung ermöglicht einen mehrstöckigen Aufbau. Mehrere Arbeitsplätze können sowohl nebeneinander als auch untereinander angeordnet werden, wobei diese aus ein und demselben Regal und, bei übereinander liegender Regalanordnung aus zwei Regalen, von ein und demselben Lift(en) bzw. ein und derselben Lifteinheit(en) versorgt werden können.

Außerdem ist es von Vorteil, wenn die Packstation über eine Fördertechnik an die Lifteinheit angekoppelt ist.

Es kann vorkommen, dass besonders zerbrechliche Artikel zu kommissionieren sind, die nicht von einem Kommissionierer gehandhabt werden können. Ähnliches gilt für besonders schwere Artikel. In diesen Fällen wird ein kurzes Stück Fördertechnik zwischen Lifteinheit und Packstation vorgesehen, um den entsprechenden Transfer zu ermöglichen.

Insbesondere ist der Versandträger eine Palette, vorzugsweise eine Euro-Palette.

Paletten stellen genormte Transportträger dar, auf denen besonders viele Artikel in einer beachtlichen Höhe gestapelt werden können.

Gemäß einer weiteren Ausgestaltung der Erfindung weist die Packstation ferner eine Wickeleinrichtung auf, um auf den Versandträger gepackte Artikel zur Sicherung gegen ein Verrutschen mit Sicherungsmitteln, insbesondere einer Folie, außenumfänglich zu umwickeln.

Für den Abtransport fertig kommissionierter Versandträger ist vorzugsweise eine Versandträger-Fördertechnik vorgesehen.

Gemäß einem weiteren Aspekt der vorliegenden Erfindung wird ein Verfahren gemäß Anspruch 9 zum Kommissionieren und gleichzeitigen Packen von Artikeln aus einem Regal auf einen Versandträger gemäß einem Kommissionierauftrag vorgeschlagen, wobei das Regal in zumindest eine Regalebene unterteilt wird, wobei jede Regalebene eine Vielzahl von Regalplätzen zum Lagern von Ladehilfsmitteln aufweist, in denen bzw. auf denen die Artikel gelagert werden, mit den folgenden Schritten: Transportieren von Ladehilfsmitteln, die dem Kommissionierauftrag zugeordnet sind, von den Regalplätzen, die an eine seitlich vertikale Lifteinheit angrenzen, über die Lifteinheit zu einer Packstation, die in einem unmittelbaren Bereich der Lifteinheit angeordnet ist; und Entnehmen eines zu kommissionierenden Artikels aus bzw. von dem Ladehilfsmittel und Packen auf einen in der Packstation bereitgestellten Versandträger.

Das Verfahren umfasst ferner die Schritte: Abholen des Ladehilfsmittels aus einem angrenzenden Regalplatz unter Verwendung eines Lastaufnahmemittels der Lifteinheit; und Abgeben des abgeholten Ladehilfsmittels mit dem Lastaufnahmemittel an die Packstation.

Vorzugsweise werden die Ladehilfsmittel an eine Einrichtung zum Präsentieren eines Ladehilfsmittels abgegeben und anschließend präsentiert.

Besonders von Vorteil ist es, wenn der Schritt des Präsentierens ein Absenken der Einrichtung zum Präsentieren eines Ladehilfsmittels in Richtung der Packstation umfasst.

Außerdem ist es bevorzugt, wenn der Versandträger abgesenkt wird, wenn eine Packschicht mit zu kommissionierenden Artikeln vollständig gepackt ist, wobei das Absenken um die Höhe einer Packschicht erfolgt.

Vorzugsweise wird die abgesenkte Packschicht mit einem Sicherungsmittel, insbesondere einer Folie, umwickelt.

Gemäß einer bevorzugten Ausführungsform des Verfahrens gemäß der vorliegenden Erfindung wird ein leerer Versandträger zur Packstation über eine Versandträger-Förderstrecke geliefert, die auch zum Abtransport fertig kommissionierter und gepackter Versandträger benutzt werden kann, oder leere Versandträger werden über die Lifteinheit aus dem Regal an die Packstation geliefert.

Außerdem kann das Packen manuell von einer Kommissionierperson oder maschinell von einem Roboter durchgeführt werden, ohne dass weite Strecken zurückgelegt werden müssen.

Gemäß einer weiteren Ausgestaltung werden Ladehilfsmittel mit zu kommissionierenden Artikeln aus mehreren Regalen, insbesondere gleichzeitig, zur Packstation transportiert, um zeitnah, vorzugsweise gleichzeitig, auf den Versandträger gepackt zu werden, wobei Lifteinheiten der Regale alle im unmittelbaren Bereich der Packstation liegen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
- Fig. 1: zeigt eine schematische perspektivische Ansicht einer Kommissionieranlage, die mit mehreren Arbeitsplätzen gemäß der vorliegenden Erfindung ausgestattet ist.
- Fig. 2: zeigt eine perspektivische Ansicht von zwei Arbeitsplätzen gemäß der vorliegenden Erfindung.
- Fig. 3: zeigt einen weiteren Arbeitsplatz gemäß der vorliegenden Erfindung in einer perspektivischen Ansicht.
- Fig. 4: zeigt eine perspektivische Ansicht einer weiteren Ausführungsform eines Arbeitsplatzes gemäß der vorliegenden Erfindung.
- Fig. 5: zeigt eine noch weitere Ausführungsform eines Arbeitsplatzes gemäß der vorliegenden Erfindung.
- Fig. 6: zeigt eine noch weitere Ausführungsform von Arbeitsplätzen gemäß der vorliegenden Erfindung.
- Fig. 7: zeigt eine perspektivische Ansicht eines weiteren Kommissioniersystems, bei dem erfindungsgemäß Arbeitsplätze eingesetzt werden.
- Fig.8: zeigt eine schematisierte Draufsicht auf weitere Arbeitsplätze gemäß der vorliegenden Erfindung.

Nachfolgend werden gleiche Elemente mit den gleichen Bezugsziffern versehen werden.

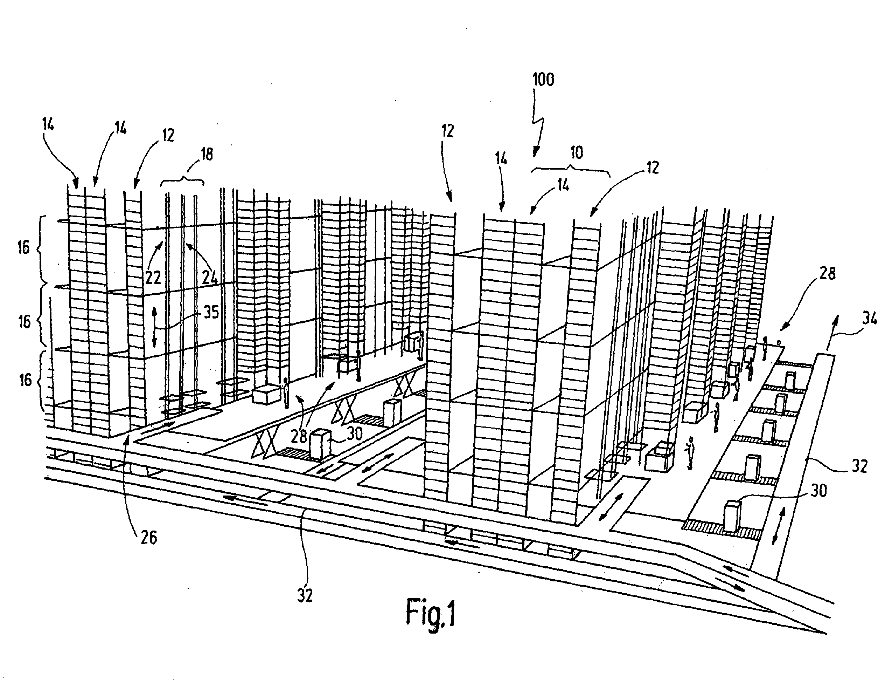

Bezug nehmend auf Fig. 1 wird die Verwendung der vorliegenden Erfindung in einer Kommissionieranlage 100 erläutert werden. Die Erfindung ist insbesondere im Bereich Lebensmittel-Retail einsetzbar, wo Waren auf Paletten oder in Roll-Container von Filialen bestellt und an diese geliefert werden.

Das Kommissioniersystem bzw. Kommissionierlager 100 der Fig. 1 weist mehrere Regaleinheiten 10 auf, die jeweils vorzugsweise aus einem ersten Regal 12 und einem zweiten Regal 14 gebildet sein können. Die Regaleinheiten weisen insbesondere mehrere Regalebenen 16 auf. Die Regaleinheiten 10 der Fig. 1 weisen jeweils fünf übereinander liegende Regalebenen 16 auf. Jeweils zwei Regaleinheiten sind hier Rücken an Rücken zueinander angeordnet und bilden so einen Regalblock. Es versteht sich, dass Regaleinheiten auch nur aus einzelnen Regalen 12, 14 gebildet werden können. Gleiches gilt für die Regaleinheiten.

Die Regalebenen 16 umfassen hier eine Vielzahl von übereinander liegenden Regalzeilen, die wiederum aus einer Vielzahl nebeneinander angeordneter Regalplätze aufgebaut sind. Die Regalebenen der Fig. 1 umfassen exemplarisch sechs Regalzeilen. Jede Regalzeile umfasst z.B. 100 bis 200 nebeneinander angeordnete Regalplätze (nicht gezeigt).

In jeder Regalebene ist in einem Zwischenraum zwischen dem ersten Regal 12 und dem zweiten Regal 14 eine sog. Regalgasse gebildet, in der zumindest eine Lagermaschine, wie z.B. ein Regalbediengerät ("RBG") sowohl in horizontaler Längsrichtung als auch in vertikaler Richtung, vorzugsweise gleichzeitig, bewegt werden kann. Im Falle eines Einzelregals kann das RBG auch mechanisch an die Außenseite des Regals gekoppelt sein. Die Lagermaschinen verfügen über entsprechende Lastaufnahmemittel ("LAM"), mit denen Ladehilfsmittel von Regalplätzen abgeholt und an Regalplätze abgegeben werden können. Jede Lagermaschine kann über mehrere LAM verfügen.

Der grundsätzliche Aufbau eines solchen Regallagers ist in der parallelen Anmeldung mit dem Titel "Regallager und Kommissionierverfahren", die von der Anmelderin am gleichen Tage wie die vorliegende Anmeldung eingereicht wurde, beschrieben, auf deren Inhalt hier Bezug genommen wird.

Ferner ist bei der in der Fig. 1 in der linken Hälfte dargestellten Regaleinheit eine erste Lifteinheit 18 sowie eine zweite Lifteinheit 20 dargestellt, die jeweils über zumindest einen ersten Lift 22 und vorzugsweise über einen zweiten Lift 24 mit jeweils einem oder mehreren LAM verfügen. Die erste Lifteinheit 18 kann zur Einlagerung von Waren in die Regale 12, 14 verwendet werden, wozu die erste Lifteinheit 18 vorzugsweise mit einer Wareneingang-Fördertechnik 26 verbunden ist. Bei der Wareneingang-Fördertechnik 26 kann es sich z.B. um eine (motorbetriebene) Rollenförderbahn oder einen endlos umlaufenden Gurtförderer handeln, der die in Richtung der auf der Fördertechnik dargestellten schwarzen Pfeile betrieben wird. Die Fördertechnik 26 liefert einzulagernde Artikel direkt oder auf Ladehilfsmitteln zur Einlagerung über die erste Lifteinheit 18 in die Regaleinheit 10. Unter Ladehilfsmittel werden nachfolgend Paletten, Tablare, Behälter u.Ä. verstanden.

Wie die erste Lifteinheit 18 ist auch die zweite Lifteinheit 20 entlang einer außenliegenden Längsseite des Regalblocks angeordnet. Die zweite Lifteinheit 20 dient zur Auslagerung von Artikeln aus den Regalen 12, 14. Die Lifteinheit 20 grenzt direkt an das Regal 12 an, um ein Ladehilfsmittel von einem angrenzenden Regalplatz (Transferregalplatz) abholen zu können. Das LAM des entsprechenden Lifts greift dazu entweder unter das Ladehilfsmittel oder an eine Vorderseite des Ladehilfsmittels und hebt bzw. zieht das Ladehilfsmittel auf das LAM. Die angrenzenden Regalplätze stellen Transferregalplätze dar. Die Transferregalplätze werden mit den in den Gassen verfahrbaren Lagermaschinen versorgt. Die Lagermaschine fährt in horizontaler und vertikaler Richtung entlang der Gasse, um, gemäß einem Kommissionierauftrag, zugehörige Ladehilfsmittel aus entsprechenden Regalplätzen abzuholen und an Transferregalplätze abzugeben (,und umgekehrt). Die Lifteinheit 20 holt das im Transferregalplatz bereitgestellte Ladehilfsmittel ab und transportiert es in vertikale Richtung zu einem Arbeitsplatz 28.

In der Fig. 1 ist pro Regalblock eine Vielzahl von Arbeitsplätzen 28 gemäß der vorliegenden Erfindung gezeigt. In der Fig. 1 sind die Arbeitsplätze 28 an den Außenseiten der Regalblöcke nebeneinander angeordnet. Alternativ können Arbeitsplätze auch in mehreren Ebenen übereinander mit (optional) jeweils einem oder mehreren Arbeitsplätzen nebeneinander angeordnet werden. Ferner können die zwei in Fig. 1 dargestellten Regalblöcke derart nahe zueinander angeordnet werden, dass sich Arbeitsplätze 28 des ersten Regalblocks und des zweiten Regalblocks direkt gegenüberliegen.

Die Arbeitsplätze 28 sind also in die Regale 12 integriert. Sie umfassen räumliche Bereiche, in denen z.B. Kommissionierer bei der Entnahme und beim Packen tätig sind.

Ferner sind in Fig. 1 (fertig kommissionierte) Versandträger 30, hier exemplarisch Paletten, gezeigt. Die Versandträger 30 werden hier auf Höhe der untersten Regalebene 16 mit Hilfe einer Versandträger-Fördertechnik 32 transportiert. Die Versandträger-Fördertechnik 32 ist vorzugsweise an eine oder mehrere Versandstationen angeschlossen, wie es durch einen Pfeil 34 exemplarisch angedeutet ist. Die Versandstation bzw. Versandstationen sind in Fig. 1 nicht dargestellt.

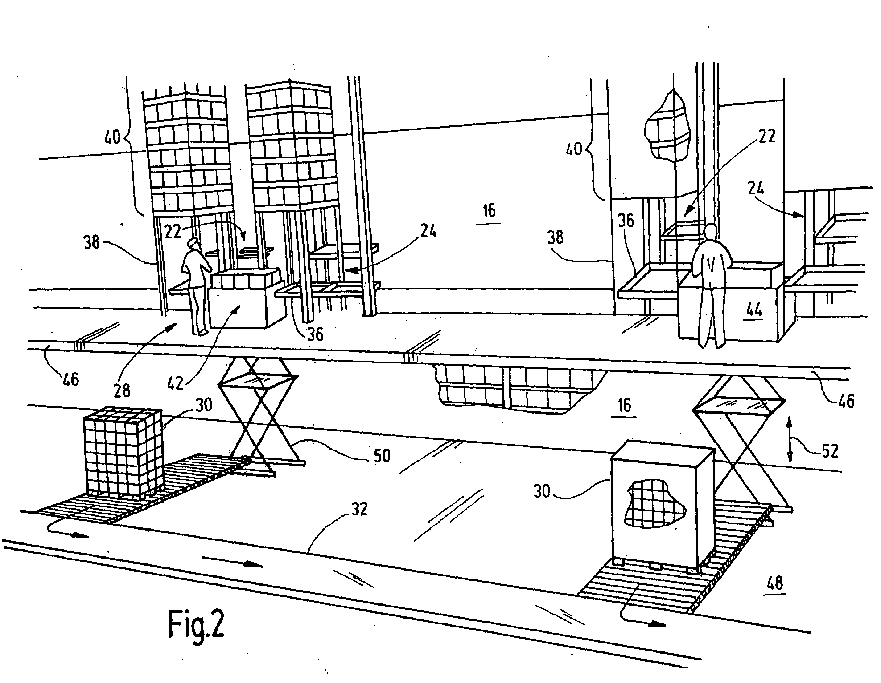

Bezug nehmend auf Fig. 2 sind exemplarisch zwei Arbeitsplätze 28, 28' der Fig. 1 dargestellt, die im Bereich der zweiten Regalebene 16 angeordnet sind, die wiederum über einer untersten Regalebene 16 angeordnet ist (vgl. Fig. 1). Die Arbeitsplätze 28, 28' umfassen jeweils eine zugeordnete Lifteinheit 20, die mehrere Lifte 22, 24 aufweisen können. Die Lifte 22, 24 umfassen jeweils ein oder mehrere LAM, um Ladehilfsmittel aus Transferregalplätzen abzuholen und ggf. Ladehilfsmittel an Transferregalplätze zurückzugeben. Die Arbeitsplätze 28, 28' umfassen optional Einrichtungen 36 zum Präsentieren von Ladehilfsmitteln, wobei jedem Lift 22, 24 jeweils eine Einrichtung 36 zum Präsentieren von Ladehilfsmitteln zugeordnet ist.

Die Einrichtung 36 zum Präsentieren von Ladehilfsmitteln (die hier in Fig. 2 nicht gezeigt sind,) umfasst eine Arbeitsfläche, die vorzugsweise mit abgesenkten Rollen versehen ist, um den Transfer von Ladehilfsmitteln zu vereinfachen. Die Arbeitsfläche kann vorzugsweise gekippt werden. Dazu sind (hier nicht dargestellte) Mittel zum Neigen der Einrichtung 36 zum Präsentieren der Ladehilfsmittel vorgesehen. Die Arbeitsfläche kann in verschiedene Richtungen gekippt werden.

In der Fig. 2 sind die Einrichtungen 36, die an den Arbeitsplätze 28, 28' jeweils im linken Bereich angeordnet sind, nach vorn, d.h. von der Längsseite des Regals weg hin zu einer Kommissionierperson geneigt. Die Einrichtung 36 lässt sich jedoch auch so ausbilden, dass eine Neigung in eine andere Richtung durchgeführt werden kann, wie es nachfolgend noch ausführlich erläutert werden wird.

Die Einrichtung(en) 36 zum Präsentieren von Ladehilfsmitteln ist bzw. sind vorzugsweise in ein Gestell 38 nach Art des Regals integriert, und zwar vorzugsweise in Greifhöhe und Armreichweite (Andienungshöhe) eines (stehenden/sitzenden) Kommissionierers. Oberhalb der Einrichtungen 36 zum Präsentieren von Ladehilfsmitteln können jeweils Bereiche 40 zum Vorsehen zusätzlicher Regalplätze angeordnet werden. In diesen Bereichen 40 können Ladehilfsmittel mit häufig benötigten Artikeln (A-Artikel, Schnelldreher bzw. Schnellläufer) gelagert werden.

Zwischen den in Fig. 2 gezeigten Einrichtungen 36 zum Präsentieren von Ladehilfsmitteln ist bei jedem der Arbeitsplätze 28, 28' eine Packstation 42 angeordnet. Die Packstation 42 kann einen Rahmen 44 zum Unterstützen von Packvorgängen aufweisen.

Die Packstation 42 ist in einem unmittelbaren Bereich der Lifteinheit 20 angeordnet. Der unmittelbare Bereich ist dadurch definiert, dass eine Kommissionierperson sich möglichst überhaupt nicht von einem vorbestimmten Ort fortbewegen muss, um Artikel von bzw. aus Ladehilfsmitteln auf einen Versandträger (hier nicht sichtbar) zu packen. Der unmittelbare Bereich zeichnet sich auch dadurch aus, dass keine Fördertechnik zwischen den Liften 22, 24 und der Packstation 42 vorgesehen werden muss, um einen Transfer von Ladehilfsmitteln zwischen Lifteinheit 20 und Packstation 42 zu ermöglichen. Das Kommssionieren und Packen erfolgt also im unmittelbaren Bereich der Lifteinheit. Vorzugsweise kann die Einrichtung 36 zum Präsentieren weggelassen werden und direkt aus der Lifteinheit kommissioniert werden.

Bei den in Fig. 2 dargestellten Arbeitsplätzen 28, 28' ist die Packstation 42 jeweils zwischen den Einrichtungen 38 zum Präsentieren von Ladehilfsmitteln angeordnet. Für Arbeitsplätze (nicht dargestellt), die keine Einrichtungen 36 zum Präsentieren von Ladehilfsmitteln aufweisen, könnte die Packstation auch direkt zwischen den Liften 22, 24 der Lifteinheit 20 angeordnet sein, um zu kommissionierende Artikel direkt vom Lift auf den Versandträger zu packen. In diesem Fall grenzt die Packstation direkt an die Längsseite des Regals an.

Die Breite und Tiefe der Lifte 22, 24 sowie der Einrichtungen 36 zum Präsentieren von Ladehilfsmitteln, und vorzugsweise der Packstation 42, liegt in der Größenordnung der Abmessungen eines Ladehilfsmittels oder eines Versandträgers. Die Abmessungen eines Ladehilfsmittels und eines Versandträgers sind ungefähr gleich, insbesondere wenn als Versandträger z.B. Euro-Paletten verwendet werden und auf den Ladehilfsmitteln Artikel schichtweise gelagert werden, die zuvor von Wareneingangs-Euro-Paletten schichtweise auf die Ladehilfsmittel depalettiert wurden.

Die Lifte 22, 24, die Einrichtungen 36 zum Präsentieren der Ladehilfsmittel sowie die Packstation 42 sind so zueinander angeordnet, dass ein Transfer eines Ladehilfsmittels zwischen diesen Komponenten direkt, d.h. ohne Zwischenschaltung einer weiteren Fördertechnik geschehen kann. Gleiches gilt für den Transfer eines Ladehilfsmittels zwischen den Liften 22, 24 und dem Regal 12 (vgl. Fig. 1).

Es versteht sich, dass ein Arbeitsplatz gemäß der vorliegenden Erfindung auch nur einen Lift und eine Packstation umfassen könnte, wobei vorzugsweise eine Einrichtung zum Präsentieren von Ladehilfsmitteln dazwischengekoppelt ist.

Die Packstation 42 ist in Fig. 2 auf Höhe der zweiten Regalebene 16 auf einer Kommissionierebene 46 angeordnet. Darunter liegend ist in Höhe der untersten Regalebene 16 ein weiteres Niveau 48 gezeigt. Auf dem Niveau 48 ist vorzugsweise die Versandträger-Fördertechnik 32 angeordnet.

Die Packstation 42 bzw. der Arbeitsplatz 28 umfasst ferner eine Hubeinrichtung 50, die wiederum auf dem tiefergelegenen Niveau 48 angeordnet sein kann. Die Hubeinrichtung 50 ist entlang eines Pfeils 52 in vertikaler Richtung hebbar und senkbar. Mit Hilfe der Hubeinrichtung 50 wird ein zu packender Versandträger um eine Packschicht abgesenkt, sobald ein Kommissionierer eine Schicht des Versandträgers mit Artikeln bepackt hat. Insbesondere ist unterhalb der Ebene 46 eine (hier nicht dargestellte) Wickelvorrichtung vorgesehen, mit der bereits gepackte und (bereits entsprechend abgesenkte) Packschichten auf dem Versandträger bspw. mit einer thermoplastischen Folie umwickelt und verschweißt werden können, um ein Verrutschen oder Kollabieren des gepackten Artikelstapels zu verhindern.

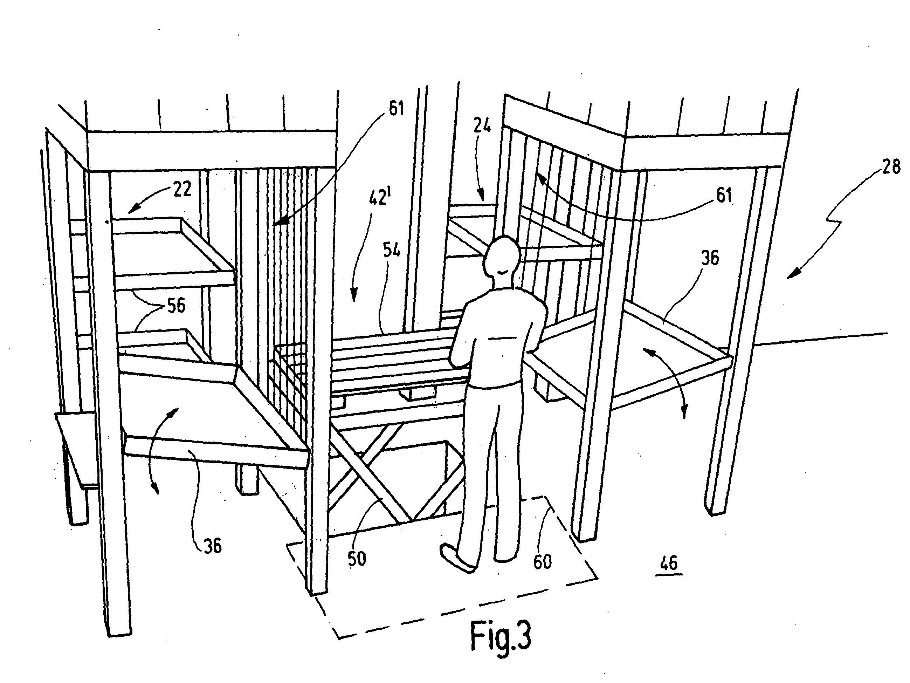

Bezug nehmend auf Fig. 3 ist eine weitere Ausführungsform eines Arbeitsplatzes 28 gemäß der vorliegenden Erfindung gezeigt, der sehr ähnlich zu den in Fig. 2 gezeigten Arbeitsplätzen 28, 28' aufgebaut ist.

Der Arbeitsplatz 28 der Fig. 3 unterscheidet sich von dem Arbeitsplatz 28 bzw. 28' der Fig. 2 darin, dass hier aus Veranschaulichungszwecken kein Rahmen 44 zum Unterstützen des Packvorgangs gezeigt ist. In der Fig. 3 sind die LAM 76 der Lifte 22 und 24 deutlich zu erkennen. Die Einrichtungen 36 zum Präsentieren von Ladehilfsmitteln werden derart in Richtung der Packstation 42' (ohne Rahmen 44) geneigt, dass sich ein Kommissionierer 58 lediglich in einem Kommissionierbereich 60 bewegen muss, um zu kommissionierende Einheiten in Richtung eines Versandträgers 54 zu bewegen bzw. zu verschieben.

Die Einrichtungen 36 sowie der Versandträger 54 sind vorzugsweise in Hüfthöhe des Kommissionierers 58 angeordnet, so dass sich der Kommissionierer 58 beim Transferieren der zu kommissionierenden Artikel auf den Versandträger 54 nicht bücken oder strecken muss. Dies erhöht die Ergonomie des Arbeitsplatzes. Auch die räumliche Beschränktheit des Kommissionierbereichs 60, der durch eine gestrichelte Linie angedeutet ist, erhöht die Ergonomie.

Der leere Versandträger 54 (Euro-Palette), der in Fig. 3 dargestellt ist, kann entweder mit Hilfe der Hubeinrichtung 50 von dem (hier nicht dargestellten) tiefergelegenen Niveau 48 auf das Niveau 46 des Arbeitsplatzes 28 angehoben werden. Ein leerer Versandträger 54 könnte jedoch alternativ z.B. in den zusätzlichen Regalplätzen 40 (vgl. Fig. 2) gelagert werden und von dem zugeordneten Lift 22 bzw. 24 mit dessen LAM 56 abgeholt und an die Einrichtung 36 abgegeben werden, die entweder - relativ zur Packstation 42' - durch Anheben der äußeren bzw. Absenken der inneren Seite der Fläche der Einrichtung 36 zum Präsentieren von Ladehilfsmitteln bzw. von Versandträgern geneigt wird. Der Kommissionierer 58 kann dann auf einfache Weise den leeren Versandträger 54 auf die Hubeinrichtung 50 ziehen. Vorzugsweise ist dazu ein (nicht dargestellter) Mechanismus vorgesehen, der den Transfervorgang bei Aktivierung durch den Kommissionierer 58 mit einer Hilfskraft unterstützt.

Aus Gründen der Arbeitssicherheit sowie zur Überwachung (Zugriff, Abgabe) und zur Bestätigung (Zählen) von Transfervorgängen zwischen den LAM 56, den Einrichtungen 36 sowie der Hubeinrichtung 50 können Sensoren, wie z.B. Lichtgitter 60, 61', an Orten entsprechender Transfers vorgesehen werden.

Mit dem Lichtgitter 61 können Transfers zwischen der Einrichtung 36 zum Präsentieren von Ladehilfsmitteln und dem Versandträger 54 bzw. der Hubeinrichtung 50 überwacht werden. Das Lichtgitter 61 dient vorzugsweise zur Bestätigung eines Kommissioniervorgangs, d.h. zur Bestätigung einer Entnahme von zu kommissionierenden Artikeln und/oder Abgabe dieser Artikel an den Versandträger 54. Das Lichtgitter 61' dient zur Quittierung von Transfervorgängen zwischen dem Lift 24 und der Einrichtung 36 zum Präsentieren von Ladehilfsmitteln. Ferner kann das Lichtgitter 61 bzw. können die von ihm erzeugten Signale dazu benutzt werden, einen Ladehilfsmitteltransfer zu untersagen, wenn der Kommissionierer 58 seine Arme und/oder Hände im Bereich der Einrichtung 36 hat. Auf diese Weise können Verletzungen des Kommissionierers 58 bei einem nicht beabsichtigten Transfer von Ladehilfsmitteln verhindert werden, da der Transfer in der Regel automatisiert erfolgt. Weist die Lifteinheit mehrere Lifte auf, kann überwacht werden, ob aus dem "richtigen" Lift entnommen wurde. Dazu kann ferner eine Anzeige vorgesehen sein, die eine Anzahl zu entnehmender Artikel sowie den Lift anzeigt, aus dem entnommen werden muss.

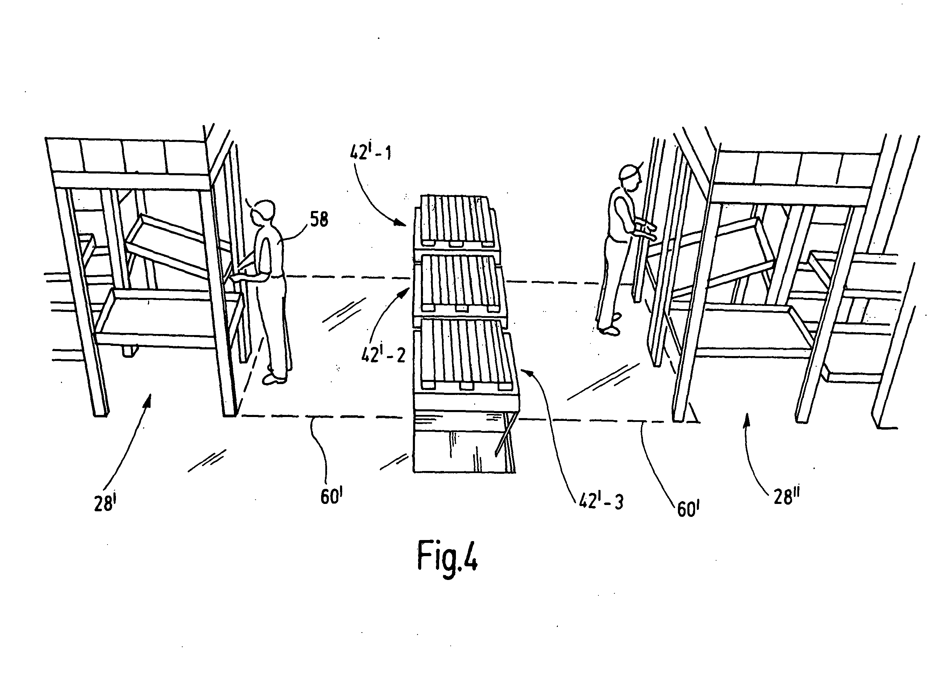

Bezug nehmend auf Fig. 4 ist eine weitere Ausführungsform eines Arbeitsplatzes 28" veranschaulicht.

Der Arbeitsplatz 28" umfasst mindestens eine Packstation. Im Beispiel der Fig. 4 sind drei Packstationen 42'-1, 42'-2 und 42'-3 dargestellt. Die Packstationen 42' sind verglichen zu dem Arbeitsplatz der Fig. 3 versetzt angeordnet. Der Arbeitsplatz 42' der Fig. 4 ist gegenüberliegend zu seinen Lifteinheiten bzw. den Einrichtungen zum Präsentieren der Ladehilfsmittel angeordnet.

Beim Arbeitsplatz 28' sind zwei Regale oder Regalblöcke (vgl. Fig. 1) derart nahe zueinander angeordnet, dass sich zwei seitliche Lifteinheiten unmittelbar gegenüberliegen. Der Arbeitsplatz 28" wird hier von zwei Kommissionierern 58 bedient, wobei jeder der Kommissionierer 58 von einer anderen Lifteinheit versorgt wird, die zu kommissionierende Artikel aus einem jeweils anderen Regal holen.

Die Kommissionierbereiche 60' definieren die Bereiche, innerhalb denen sich die Kommissionierer 58 bewegen, um zu kommissionierende Artikel auf die Ladungsträger 54 zu packen.

Anhand der Fig. 4 lassen sich also folgende Merkmale erkennen, die bei einem Arbeitsplatz gemäß der vorliegenden Erfindung ferner verändert werden können: die räumliche Anordnung der Packstation relativ zur zugehörigen Lifteinheit; die Größe des Kommissionierbereichs 60; die Anzahl der Packstationen; und die Möglichkeit mit mehreren Kommissionierern bzw. Lifteinheiten die gleiche(n) Packstation(en) mit zu kommissionierenden Artikeln zu versorgen.

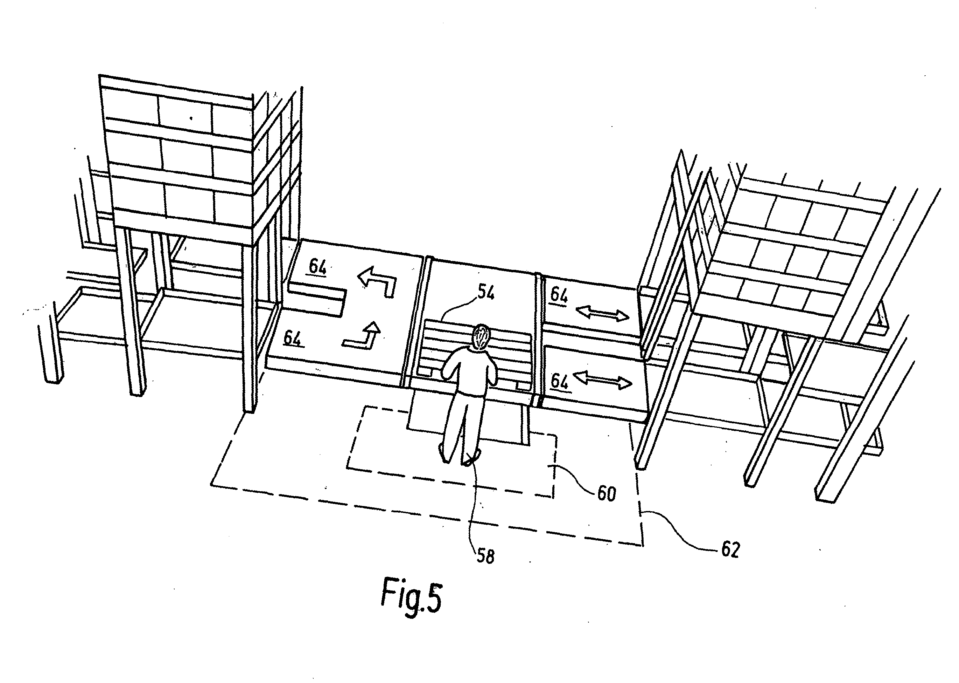

Fig. 5 zeigt eine Abwandlung des Arbeitsplatzes 28" der Fig. 4.

Bei der Ausgestaltung des Arbeitsplatzes der Fig. 5 werden eine oder mehrere Packstationen über mehrere Lifteinheiten, die jeweils einem anderen Regal zugeordnet sein können, mit zu kommissionierenden Artikeln bzw. Ladehilfsmitteln versorgt. Der Arbeitsplatz ist mittig zwischen den Längsseiten der Regale angeordnet.

Der in Fig. 5 gezeigte Arbeitsplatz zeichnet sich dadurch aus, dass hier lediglich ein Kommissionierer 58 innerhalb des Kommissionierbereichs 60 mit Artikeln bzw. Ladehilfsmitteln aus zwei verschiedenen Lifteinheiten versorgt werden kann. Es könnten sich aber zwei Kommissionierer gegenüberstehen, die jeweils auf einen Versandträger packen, der dem entsprechenden Kommissionierer zugeordnet ist. Exemplarisch ist hier der unmittelbare Bereich, innerhalb dem der Arbeitsplatz relativ zu den Lifteinheiten angeordnet ist, mit dem Bezugszeichen 62 bezeichnet und durch eine gestrichelte Linie umrandet. Zwischen der Packstation der Fig. 5 und den Lifteinheiten sind zusätzlich (kurze) Fördertechniken, wie z.B. Förderbänder, vorgesehen, um Artikel von den Lifteinheiten zur Packstation zu transportieren. Die Fördertechniken 64 könnten jedoch auch weggelassen werden. In diesem Fall würde sich der Kommissionierbereich 60 des Kommissionierers 58 auf den unmittelbaren Bereich 62 erweitern. Der Kommissionierer 58 müsste die zu kommissionierenden Artikel also "zu Fuß" von den Lifteinheiten zur Packstation bringen. Alternativ können die Regaleinheiten aber auch enger relativ zueinander angeordnet werden.

In der Draufsicht hat jeder Lift ungefähr die Fläche eines Regalplatzes. Gleiches gilt für die Packstation. Der unmittelbare Bereich, innerhalb dem die Packstation angeordnet wird relativ zur Lifteinheit angeordnet wird, ist vorzugsweise nicht größer als nur einige wenige Rgealplatzflächen (z.B. 0-4).

Die Fig. 5 zeigt in diesem Sinne zwei parallel (in der Zeichnungsebene horizontal) zueinander angeordnete Arbeitsplätze, wobei beim zweiten (hinteren) Arbeitsplatz keine entsprechende Kommissionierperson dargestellt ist.

Die Fördertechniken 64 auf der linken Seite relativ zum dargestellten Kommissionierer und die Fördertechniken 64, die rechts dazu angeordnet sind, könnten aber auch jeweils zu einem Kreisel zusammengeschlossen werden, so dass einer der Lifte der zugeordneten Lifteinheit die Versorgung mit Ladehilfsmittels aus dem Regal übernimmt, während der zugehörige andere Lift den Abtransport besorgt. Ein so ausgebildeter Packplatz hat den weiteren Vorteil, dass dem Kommissionierer Ladehilfsmittel von zwei Seiten (Regalen) parallel zugeführt werden können. Dies äußert sich in geringern Sequenzierungsanforderungen an die Maschinen jedes Regals und resultiert in einer größeren Flexibilität, was die Koordination des Ladehilfsmittelflusses von und zum Packplatz betrifft.

Ferner könnte lediglich eine Packstation zentrisch zwischen den Fördertechniken 64 angeordnet sein (nicht dargestellt), wobei auch zwei Kommissionierer auf ein und denselben Versandträger packen könnten.

Bei der Ausführungsform mit zwei Hubeinrichtungen (vgl. Fig. 5) könnten leere Versandträger 54 von einer der Hubeinrichtungen angedient werden, während die andere Hubeinrichtung einen gepackten Versandträger zum Abtransport absenkt. Dazu wäre ist es von Vorteil, wenn die eine Hubeinrichtung den leeren Versandträger an eine Zwischenlagereinrichtung (nicht gezeigt) abgibt, die den zu bepackenden Versandträger auf der Andienungshöhe des Kommissionieres hält, bis die andere Hubeinrichtung zur Übernahme dieses Versandträgers wieder nach oben gefahren ist.

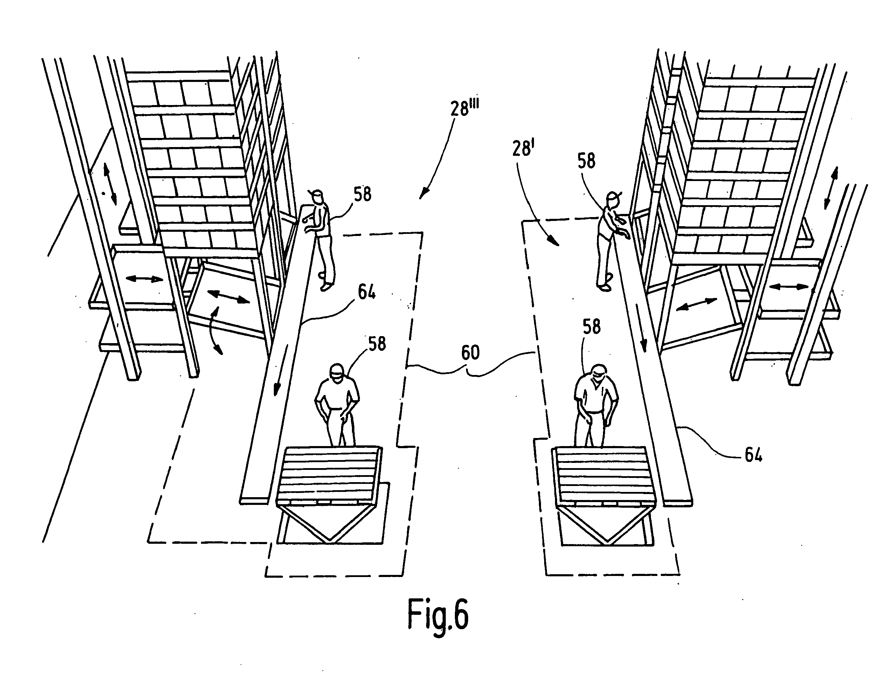

Fig. 6 zeigt eine weitere Ausführungsform eines Arbeitsplatzes 28''' gemäß der vorliegenden Erfindung.

Der Arbeitsplatz 28''' der Fig. 6 ist zweistufig aufgebaut und wird von jeweils zwei Personen 58 betrieben, die sich innerhalb des zugeordneten Kommissionierbereichs 60 bewegen können. Der Kommissionierplatz 28''' umfasst ebenfalls eine Fördertechnik 64, um Artikel bzw. Ladehilfsmittel von der Lifteinheit, wo der (erste) Kommissionierer 58 arbeitet, zu der Packstation zu fördern, wo der (zweite) Packer arbeitet.

Die in Fig. 6 gezeigte Anordnung hat den Vorteil, dass aus Sicherheitsgründen vorgeschriebene Fluchtwege für Person offen bleiben. Weiter kann die Bearbeitungsgeschwindigkeit erhöht werden, weil eine Person kommissioniert (entnimmt), während die andere Person packt.

An einem solchen Arbeitsplatz können auch sehr große Ladehilfsmittel, wie z.B. Tablare mit Maßen 1300 x 1300, gut und einfach gehandhabt werden. Die Personen müssen sich nicht über Gebühr strecken, um an Verpackungseinheiten zu kommen, die möglicherweise in einem schlecht zugänglichen Bereich des Ladehilfsmittel angeordnet sind. Der Packer kann um den zu bepackenden Versandträger herum laufen und hat somit von allen Seiten Zugang. Gleiches gilt für die Zugänglichkeit des Ladehilfsmittels.

Ferner kann der Rahmen 44 (vgl. z.B. Fig. 2) eine außenumfänglich verlaufende horizontale Manipulationsfläche (nicht dargestellt) aufweisen, auf der der Packer zupackende Verdsandeinheiten z.B. um den Versandträger herum schiebt oder zieht.

Ferner können sich Packer und Kommissionierer abwechseln (Ergonomie/ Jobrotation). Sie können sich auch gegenseitig unterstützen.

Es versteht sich, dass die dargestellten Personen auch durch entsprechende Roboter ersetzt werden könnten. Außerdem können weitere Hilfsmittel eingesetzt werden, wie z.B. Vakuumgreifer, um schwere Gegenstände zu heben und zu bewegen.

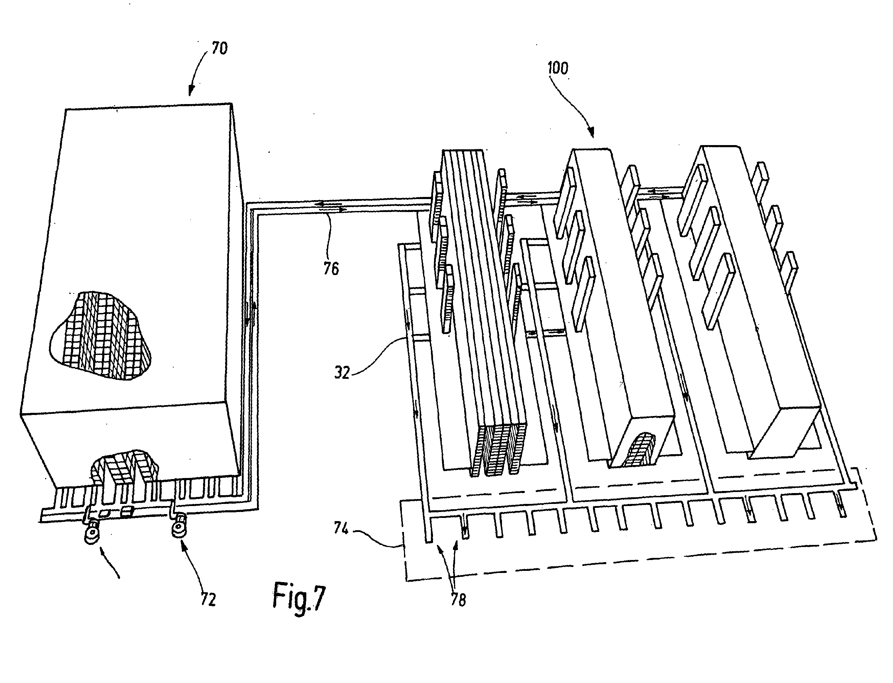

Fig. 7 zeigt eine schematische perspektivische Draufsicht auf ein Gesamtkommissioniersystem, in welches Arbeitsplätze gemäß der vorliegenden Erfindung integriert sind. Das Gesamtkommissioniersystem umfasst bspw. ein Hochregallager 70 mit angeschlossenen Depalettierungseinrichtungen 72, einen Regallagerbereich 100 (vgl.
Fig. 1) und einen Versandbereich 74.

Das Regallager 100 ist über eine Fördertechnik 76 (vgl. Bezugszeichen 26 in Fig. 1) mit dem Hochregallager 70 verbunden, um Artikel vorzugsweise auf Ladehilfsmitteln einzulagern. Im Hochregallager 70 werden vorzugsweise komplett sortenrein beladene Paletten gelagert, die je nach Bedarf im Regallager 100 schichtweise depalettiert werden, und zwar vorzugsweise schichtweise auf Tablare.

Die Kommissionierung und das Packen, d.h. die Abarbeitung eines Kommissionierauftrags, erfolgt dann im Regallager, in dem die Arbeitsplätze in die Regale integriert sind, wie es zuvor ausführlich erläutert wurde. Fertig beladene Versandträger werden dann über die Fördertechnik 32 in den Versandbereich 74 (vgl. Pfeil 34 in Fig. 1) zu einer Vielzahl von Versandstationen 78 transportiert.

Bei einem so aufgebauten Gesamtkommissioniersystem lässt sich die erforderliche Fördertechnik stark reduzieren. Die Fördertechnik beschränkt sich im Wesentlichen auf eine Wareneingangs-Fördertechnik und eine Versandträger-Fördertechnik. Die Streckenführung sowie die Steuerung lässt sich erheblich vereinfachen. Ferner ist eine Ein-Stopp-Strategie oder eine Mehrstopp-Strategie der Versandträger möglich. Kommissionieraufträge können parallel oder seriell an verschiedenen Arbeitsplätzen bearbeitet werden.

Mit den erfindungsgemäßen Arbeitsplätzen lässt sich die erforderliche Fläche erheblich reduzieren, was sich in einem erheblichen Flächengewinn sowie einer bedeutenden Reduzierung der Investitionskosten (Baugrundstück) niederschlägt.

Es versteht sich, dass der erfindungsgemäße Arbeitsplatz ferner mit einer Vielzahl von verschiedenen Regaltypen verwendet werden kann, da er in diesem Sinne modular und skalierbar aufgebaut ist.

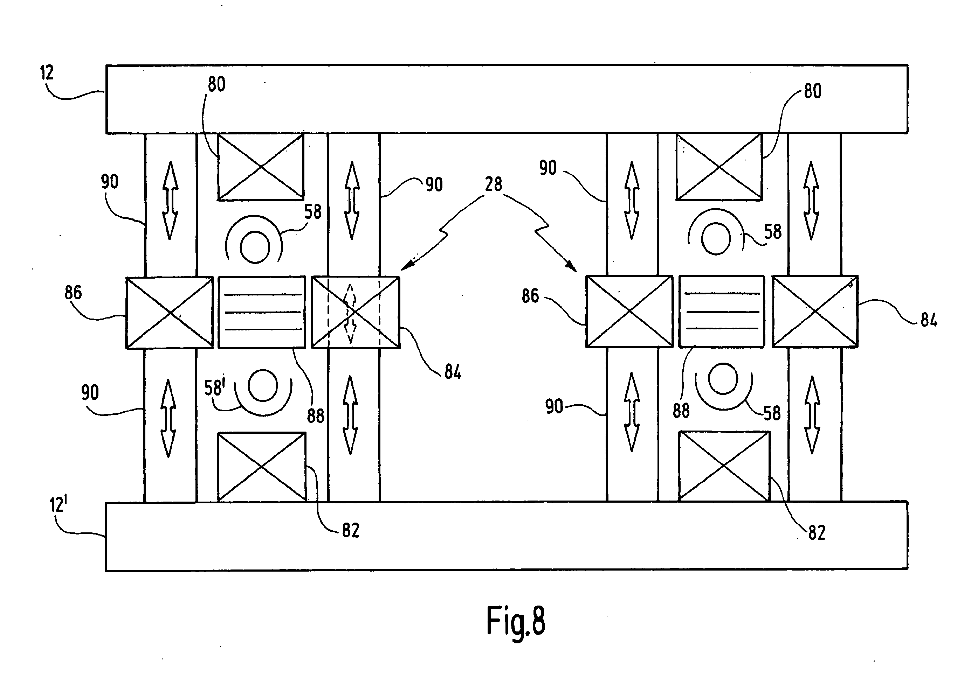

Fig. 8 zeigt eine schematiserte Draufsicht auf ein weiteres Lager, wobei zwei weitere Arbeitsplätze 28 gemäß der vorliegenden Erfindung gezeigt sind. Da die in Fig. 8 gezeigten Arbeitsplätze identisch sind, wird nachfolgend nur einer der Arbeitsplätze der Fig. 8 genauer erläutert werden.

Ein Arbeitsplatz 28 gemäß Figur 8 umfasst mehrere Lifte, die ihm zugeordnet sind und ihn mit Ladehilfsmitteln versorgt. In der Fig. 8 werden vier Lifte 80, 82, 84 und 86 eingesetzt. Es versteht sich, dass auch mehr oder weniger Lifte pro Arbeitsplatz eingesetzt werden können.

Die vier Lifte 80-86 der Fig. 8 sind in horizontaler und vertikaler Richtung um eine Packstation 88 herum angeordnet. Der erste Lift 80 holt Ladehilfsmittel vorzugsweise aus einem ersten Regal 12 und liefert sie an einen ersten Kommissionierer 58. Der zweite Lifte holt Ladehilfsmittel vorzugsweise aus einem zweiten Regal 12', um sie an einen zweiten Kommissionierer 58' zu liefern, der dem ersten Kommissionierer 58 gegenüber steht und Artikel von der gegenüberliegenden Seite der Packstation 88 auf einen Versandträger packt. Sowohl der dritte Lift 84 als auch der vierte Lift 86 sind über Fördertechniken 90 an das erste Regal 12 bzw. das zweite Regal 12' gekoppelt. Über diesen Weg können Ladehilfsmittel auch zwischen den Regalen 12 und 12' ausgetauscht werden, ohne die Kommissionierer 58, 58' tatsächlich passieren zu müssen. Insbesondere kann es direkte Verbindungen (d.h. ohne zwischengeschalteten Lift) zwischen den Regalen 12, 12' geben, um gegebenenfalls die Artikelverteilung unter den Regalen zu ändern.

Wenn zwei Kommissionierer 58, 58' an dem Arbeitspaltz 28 der Fig. 8 arbeiten, können sie problemlos größere auch große Paletten (1000 x 1200 oder größer) gemeinsam ergonomisch packen.

Um die Packstation 88 besser zugänglich zu machen, können die Lifte 84 und 86 auch weiter von der Packstation 88 beabstandet werden.

Der dritte Lift 84 und der vierte Lift 86 sind in einer Regalgasse angeordnet. Sie können aus beiden Regalen mit Ladehilfsmitteln versorgt werden. Die Ladehilfsmittel können am Fuße des Lifts, d.h. in Höhe der Packstation, seitlich in Richtung der Packstation 88 gekippt werden, um ein Herunterziehen zu erleichtern. Diese beiden Lifte 84, 86 können von beiden Kommissionierern 58, 58' bedient werden. Einer der Lifte 84, 86 kann auch zum Andienen von Leerpaletten genutzt werden. Dazu befinden sich die Arbeitsplätze 28 vorzugsweise auf einem höher gelegenen Niveau. Unterhalb dieses Niveaus, versorgen z.B. Palettenstapler die Lifte 84, 86 mit Leerpaletten. Die Palettenstapler können auch für den Abtransport von vollständig bepackten Paletten benutzt werden. Die Lifte 80-86 reichen vorzugsweise bis auf ein Niveau des Palettenstaplers. Dies resultiert in einer kurzen Palettenwechselzeit.

Durch die 4-fache Anordnung von Liften um eine Packstation können im Vergleich zum Arbeitsplatz der Fig. 2 doppelt so viele Artikel innerhalb der gleichen Zeit zur Packstation transportiert werden.

Ferner ist an den Arbeitsplätzen eine Kennzeichnung (Labeling) der Versandträger möglich. Lichtgitter erhöhen die Sicherheit. Sicherheitsabschaltungen für Paletten-und Ladehilfsmittelwechsel können vorgesehen werden. Versanträger können parallel oder seriell abgearbeitet werden. Mit den Versandträgern können Mehrstoppstrategien gefahren werden.

## Patentansprüche

1. Arbeitsplatz (28; 28'; 28"; 28''') zum Kommissionieren und gleichzeitigen Packen von Artikeln auf einen Versandträger (54), mit:
zumindest einem Regal (12; 14), das in zumindest einer Regalebene (16), die jeweils eine Vielzahl von Regalplätzen zum Lagern von Ladehilfsmitteln umfasst, unterteilt ist, wobei die zu kommissionierenden Artikel in oder auf den Ladehilfsmitteln in Regalplätzen gelagert werden, und wobei zumindest eine Lagermaschine an eine erste Längsseite des Regals gekoppelt ist, um Ladehilfsmittel zwischen Regalplätzen zu transportieren;
zumindest einer vertikalen Lifteinheit (18; 20), die an eine zweite Längsseite des Regals (12) angrenzend angeordnet ist und die dazu geeignet ist, aus solchen Regalplätzen, die an die Lifteinheit (20) angrenzen, Ladehilfsmittel abzuholen; und
zumindest einer Packstation (42; 42'), die in einem unmittelbaren Bereich (62) der Lifteinheit (20) angeordnet ist.

2. Arbeitsplatz nach Anspruch 1, der ferner eine Einrichtung (36) zum Präsentieren der Ladehilfsmittel aufweist, die derart angeordnet ist, dass Ladehilfsmittel von der Lifteinheit (20) an die Einrichtung (36) zum Präsentieren der Ladehilfsmittel abgegeben werden können.

3. Arbeitsplatz nach Anspruch 2, wobei die Einrichtung (36) zum Präsentieren der Ladehilfsmittel in ein Gestell (38) nach Art des Regals integriert ist, wobei das Gestell (38) oberhalb und/oder unterhalb der Einrichtung zum Präsentieren weitere Regalplätze zum Lagern von Ladehilfsmitteln aufweist.

4. Arbeitsplatz nach einem der vorhergehenden Ansprüche, wobei die Lifteinheit (20) zumindest einen in vertikaler Richtung beweglichen Lift (22; 24) aufweist, der ein Lastaufnahmemittel (56) zum Abholen und Abgeben von Ladehilfsmitteln von bzw. an einen Regalplatz und/oder von der bzw. an die Packstation (42; 42') umfasst, die an den Lift (22; 24) angrenzend angeordnet ist.

5. Arbeitsplatz nach Anspruch 4, wobei jede Lifteinheit (20) zumindest zwei separat in vertikaler Richtung bewegliche Lifte (22; 24) aufweist.

6. Arbeitsplatz nach Anspruch 5, wobei die Packstation (42; 42') in einem Bereich zwischen zwei benachbarten Einrichtungen (36) zum Präsentieren von Ladehilfsmitteln angeordnet ist, von denen jede einem anderen der Lifte (22; 24) zugeordnet ist angeordnet ist.

7. Arbeitsplatz nach einem der vorhergehenden Ansprüche, der ein weiteres Regal (10) mit einer ebenfalls seitlich angeordneten weiteren Lifteinheit (20) umfasst, wobei das weitere Regal (10) so gegenüberliegend zu dem Regal (10) angeordnet ist, dass die Packstation (42'; 42'-1 bis 42'3) im unmittelbaren Bereich sowohl der Lifteinheit (20) des Regals (10) als auch der weiteren Lifteinheit (20) des weiteren Regals (10) liegt.

8. Arbeitsplatz nach einem der vorhergehenden Ansprüche, wobei die Packstation (42; 42') ferner eine Wickeleinrichtung aufweist, um auf den Versandträger (54) gepackte Artikel zur Sicherung gegen ein Verrutschen mit Sicherungsmitteln, insbesondere einer Folie, außenumfänglich zu umwickeln.

9. Verfahren zum Kommissionieren und gleichzeitigen Packen von Artikeln aus einem Regal (12, 14) auf einen Versandträger (54) gemäß einem Kommissionierauftrag, wobei das Regal (10) in zumindest eine Regalebene (16) unterteilt wird, wobei jede Regalebene (16) eine Vielzahl von Regalplätzen zum Lagern von Ladehilfsmitteln aufweist, in denen bzw. auf denen die Artikel gelagert werden, und wobei zumindest eine Lagermaschine an eine erste Längsseite des Regals gekoppelt ist, um Ladehilfsmittel zwischen Regalplätzen zu transportieren, mit den folgenden Schritten:
Abholen eines Ladehilfsmittels aus einem Regalplatz entlang einer ersten Längsseite des Regals mit der Lagermaschine und Abgeben des Ladehilfsmittels an einen Transferregalplatz, der an einer zweiten Längsseite des Regals an die Lifteinheit angrenzt;
Transportieren des Ladehilfsmittels, das dem Kommissionierauftrag zugeordnet ist, von dem Transferregalplatz, der an die seitliche vertikale Lifteinheit (20) angrenzt, über die Lifteinheit (20) zu einer Packstation (42), die in einem unmittelbaren Bereich (62) der Lifteinheit (20) angeordnet ist; und
Entnehmen eines zu kommissionierenden Artikels aus bzw. von dem Ladehilfsmittel und Packen auf einen in der Packstation (42) bereitgestellten Versandträger (54).

10. Verfahren nach Anspruch 9 mit den Schritten:
Abholen des Ladehilfsmittel aus einem angrenzenden Regalplatz unter Verwendung eines Lastaufnahmemittels (56) der Lifteinheit (20); und
Abgeben des abgeholten Ladehilfsmittels mit dem Lastaufnahmemittel (56) an die Packstation (42).

11. Verfahren nach Anspruch 10, wobei der Schritt des Abgebens aufweist:
Abgeben des Ladehilfsmittels an eine Einrichtung (36) zum Präsentieren eines Ladehilfsmittels; und
Präsentieren des Ladehilfsmittels.

12. Verfahren nach Anspruch 11, wobei der Schritt des Präsentierens ein Absenken der Einrichtung (36) zum Präsentieren eines Ladehilfsmittels in Richtung der Packstation umfasst (42).

13. Verfahren nach einem der Ansprüche 9 bis 12, mit dem weiteren Schritt:
Absenken des Versandträgers (54), wenn eine Packschicht mit zu kommissionierenden Artikeln vollständig gepackt ist, insbesondere um die Höhe einer Packschicht.

14. Verfahren nach Anspruch 13, mit dem weiteren Schritt:
Umwickeln der abgesenkten Packschicht mit einem Sicherungsmittel.

15. Verfahren nach einem der Ansprüche 9 bis 14, mit dem Schritt:
Liefern eines leeren Versandträgers (54) zur Packstation (42) über eine Versandträger-Förderstrecke (32), die auch zum Abtransport fertig kommissionierter und gepackter Versandträger benutzt werden kann, oder über die Lifteinheit aus dem Regal.

## Claims

1. A work station (28; 28'; 28"; 28''') for order-picking and, simultaneously, packing articles on a shipping support (54), comprising:
at least one rack (12; 14) which is divided into at least one rack plane (16) respectively comprising a plurality of rack positions for storing load supports, wherein the articles to be picked are stored in or on the load supports in the rack positions, and wherein at least one storage machine is coupled to a first longitudinal side of the rack for transporting the load supports between the rack positions;
at least a vertical lift unit (18; 20), which abuts to a longitudinal side of the rack (12) and is adapted to retrieve load supports from such rack positions which are arranged adjacent to the lift unit (20); and
at least one packing station (42; 42') which is arranged within an immediate area (62) of the lift unit (20).

2. The work station of claim 1, further comprising a device (36) for presenting load supports, which is arranged such that load supports can be delivered from the lift unit (20) to the device (36) for presenting the load supports.

3. The work station of claim 2, wherein the device (36) for presenting the load supports is integrated in a rack-type frame (38), wherein the frame (38) comprises additional rack positions for storing load supports above and/or beneath the device for presenting load supports.

4. The work station of any of the preceding claims, wherein the lift unit (20) comprises at least one lift (22; 24) being movable in a vertical direction, which comprises a load suspension device (56) for retrieving and delivering load supports from and to a rack position and/or from and to the packing station (42; 42') which is arranged adjacent to the lift (22; 24).

5. The work station of claim 4, wherein each lift unit (20) comprises at least two lifts (22; 24) being separately movable in the vertical direction.

6. The work station of claim 5, wherein the packing station (42; 42') is arranged in an area between two neighboring devices (36) for presenting load supports, each of which is assigned to another one of the lifts (22; 24).

7. The work station of any of the preceding claims, comprising another rack (10) also having another laterally arranged lift unit (20), wherein the other rack (10) is arranged oppositely to the rack (10) so that the packing station (42'; 42'-1-42'-3) is located within the immediate area of both the lift unit (20) of the rack (10) and the other lift unit (20) of the other rack (10).

8. The work station of any of the preceding claims, wherein the packing station (42; 42') further comprises a wrapping device for circumferentially wrapping articles, which are packed onto the shipping support (54), for securing the same against slipping off by means of securing means, particularly a foil.

9. A method for order-picking and, simultaneously, packing articles from a rack (12, 14) on a shipping support (54) in accordance with an order-picking order, wherein the rack (10) is divided in at least one rack plane (16), wherein each rack plane (16) has a plurality of rack positions for storing load supports, in or on which the articles are stored, and wherein a storage machine is coupled to a first longitudinal side of the rack for transport the load supports between the rack positions, the method comprising the following steps:
retrieving a load support from a rack position, along a first longitudinal side of the rack, by means of the storage machine, and delivering the load support to a transfer rack position being adjacent to the lift unit at a second longitudinal side of the rack;
transporting the load support, which is assigned to the order-picking order, from the transfer rack positions adjacent to the lateral vertical lift unit (20) via the lift unit (20) to a packing station (42), which is arranged within an immediate area (62) of the lift unit (20); and
removing an article to be picked from the load support, and packing the same on a shipping support (54) provided in the packing station (42).

10. The method of claim 9 comprising the steps:
retrieving the load support from an adjacent rack position by using a load suspension device (56) of the lift unit (20); and
delivering the retrieved load support by means of the load suspension device (56) to the packing station (42).

11. The method of claim 10, wherein the step of delivering comprises:
delivering the load support to a device (36) for presenting load supports; and
presenting the load support.

12. The method of claim 11, wherein the step of presenting includes lowering the device (36) for presenting load supports towards the packing station (42).

13. The method of any of the claims 9 to 12 comprising the additional step of:
lowering the shipping support (54), if a packing layer, including articles to be picked, is completely packed, particularly about the height of a packing layer.

14. The method of claim 13 comprising the additional step of:
wrapping the lowered packing layer by means of a securing means.

15. The method of any of the claims 9 to 14 comprising the step of:
supplying an empty shipping support (54) to the packing station (42) via a shipping-support conveyor track (32), which can also be used for transporting completely picked and packed shipping supports, or via the lift unit from the rack.

## Revendications

1. Poste de travail (28 ; 28' ; 28'' ; 28"') pour la préparation de commandes et le conditionnement simultané d'articles sur un support d'expédition (54), comportant :
au moins un rayonnage (12 ; 14) qui est divisé en au moins un niveau de rayonnage (16) comportant respectivement une pluralité d'espaces de rayonnage pour l'entreposage de moyens de chargement, dans lequel les articles à préparer pour une commande sont entreposés dans ou sur les moyens de chargement dans des espaces de rayonnage, et dans lequel au moins une machine d'entreposage est couplée à un premier côté longitudinal du rayonnage afin de transporter les moyens de chargement entre les espaces de rayonnage,
au moins une unité de levage verticale (18 ; 20) qui est agencée de manière adjacente à un second côté longitudinal du rayonnage (12) et est adaptée pour récupérer des moyens de chargement à partir de ces espaces de rayonnage qui sont adjacents à l'unité de levage (20), et
au moins une station de conditionnement (42 ; 42') qui est agencée dans une zone immédiate (62) de l'unité de levage (20).

2. Poste de travail selon la revendication 1, comportant de plus un dispositif (36) pour présenter les moyens de chargement, qui est agencé de telle sorte que les moyens de chargement peuvent être transférés depuis l'unité de levage (20) jusqu'au dispositif (36) de présentation des moyens de chargement.

3. Poste de travail selon la revendication 2, dans lequel le dispositif (36) de présentation des moyens de chargement est intégré dans un châssis (38) du type du rayonnage, le châssis (38) comportant des espaces de rayonnage supplémentaires pour l'entreposage de moyens de chargement au-dessus et/ou au-dessous du dispositif de présentation.

4. Poste de travail selon l'une des revendications précédentes, dans lequel l'unité de levage (20) comporte au moins un élévateur mobile dans une direction verticale (22 ; 24) qui comporte des moyens de support de charge (56) pour récupérer et transférer des moyens de chargement depuis ou jusqu'à un espace de rayonnage et/ou depuis ou jusqu'à la station de conditionnement (42 ; 42'), qui sont agencés de manière adjacente à l'élévateur (22 ; 24).

5. Poste de travail selon la revendication 4, dans lequel chaque unité de levage (20) comporte au moins deux élévateurs mobiles séparément dans la direction verticale (22 ; 24).

6. Poste de travail selon la revendication 5, dans lequel la station de conditionnement (42 ; 42') est agencée dans une zone entre deux dispositifs (36) voisins de présentation de moyens de chargement, chacun d'entre eux étant affecté à un autre des élévateurs (22 ; 24).

7. Poste de travail selon l'une des revendications précédentes, comportant un rayonnage supplémentaire (10) ayant également une unité de levage supplémentaire (20) agencée latéralement, dans lequel le rayonnage supplémentaire (10) est agencé en face du rayonnage (10) de telle sorte que la station de conditionnement (42' ; 42'-1 à 42'-3) est dans la zone immédiate aussi bien de l'unité de levage (20) du rayonnage (10) que de l'unité de levage supplémentaire (20) du rayonnage supplémentaire (10).

8. Poste de travail selon l'une des revendications précédentes, dans lequel la station de conditionnement (42 ; 42') comporte en outre un dispositif d'emballage pour emballer la circonférence extérieure d'articles conditionnés à l'aide de moyens de protection, en particulier d'un film, sur le support d'expédition (54) afin de les empêcher de glisser.

9. Procédé pour la préparation de commandes et le conditionnement simultané d'articles à partir d'un rayonnage (12, 14) sur un support d'expédition (54) conformément à un ordre de préparation de commandes, dans lequel le rayonnage (10) est divisé en au moins un niveau de rayonnage (16), dans lequel chaque niveau de rayonnage (16) comporte une pluralité d'espaces de rayonnage pour entreposer des moyens de chargement dans ou sur lesquels sont entreposés les articles, et dans lequel au moins une machine d'entreposage est couplée à un premier côté longitudinal du rayonnage afin de transporter les moyens de chargement entre les espaces de rayonnage, comportant les étapes suivantes consistant à :
récupérer des moyens de chargement à partir d'un espace de rayonnage le long d'un premier côté longitudinal du rayonnage à l'aide de la machine d'entreposage et transférer les moyens de chargement jusqu'à un espace de rayonnage de transfert adjacent à un second côté longitudinal du rayonnage sur l'unité de levage,
transporter les moyens de chargement qui sont affectés à l'ordre de préparation de commandes, depuis l'espace de rayonnage adjacent à l'unité de levage verticale latérale (20), par l'intermédiaire de l'unité de levage (20), jusqu'à une station de conditionnement (42) agencée dans une zone immédiate (62) de l'unité de levage (20), et
retirer un article à mettre en commande depuis les moyens de chargement ou par l'intermédiaire de ceux-ci, et le conditionner sur un support d'expédition (54) disponible dans la station de conditionnement (42).

10. Procédé selon la revendication 9 comportant les étapes consistant à :
récupérer les moyens de chargement à partir d'un espace de rayonnage adjacent en utilisant des moyens de support de charge (56) de l'unité de levage (20), et
transférer les moyens de chargement récupérés à l'aide des moyens de support de charge (56) jusqu'à la station de conditionnement (42).

11. Procédé selon la revendication 10, dans lequel l'étape de transfert comporte les étapes consistant à :
transférer les moyens de chargement jusqu'à un dispositif (36) pour une présentation de moyens de chargement, et
présenter les moyens de chargement.

12. Procédé selon la revendication 11, dans lequel l'étape de présentation comporte une descente du dispositif (36) pour présenter des moyens de chargement en direction de la station de conditionnement (42).

13. Procédé selon l'une des revendications 9 à 12, comportant les étapes supplémentaires consistant à :
abaisser le support d'expédition (54) lorsqu'une couche de conditionnement d'articles à mettre en commande est entièrement conditionnée, en particulier autour de la hauteur d'une couche de conditionnement.

14. Procédé selon la revendication 13, comportant l'étape supplémentaire consistant à :
emballer la couche de conditionnement abaissée à l'aide de moyens de protection.

15. Procédé selon l'une des revendications 9 à 14, comportant l'étape consistant à :
acheminer un support d'expédition vide (54) jusqu'à la station de conditionnement (42) par l'intermédiaire d'une piste de transfert de support d'expédition (32) qui peut également être utilisée pour l'évacuation de supports d'expédition entièrement mis en commande et conditionnés, ou par l'intermédiaire de l'unité de levage à partir du rayonnage.
